# EUROPEAN PATENT APPLICATION

(11) **EP 0 560 451 A1**
(43) Date of publication of application: **15.09.1993**
(21) Application number: 93200688.5
(22) Date of filing: 10.03.1993
(51) Int. Cl.: F16G 11/12

(54) **Wire tensioning device**

(30) Priority: 12.03.1992 BE 9200251
(71) Applicant: N.V. BEKAERT S.A., B-8550 Zwevegem (BE)
(72) Inventor: Vanthournout, Rafael, B-8770 Ingelmunster (BE)
(74) Representative: Vandevelde, Willy V.G.

(57) **Abstract**

A wire tensioning device for the fixing and tensioning of a metal wire (19) to a fence post (17), which device has the form of a metal strip (1) that can be closed into a loop, and in which a spindle (9) is mounted on wich the extremity of the wire (19) to be tensioned can be wound up, and of which the rotation in the unwinding direction is prevented by a barb system (16). The part that is directed towards the post has the form of two hooks (18) that can embrace together a fence post (17), and of which the one extremity comprises a button (22), and the other extremity a button-hole (21), in such a way that the wire tensioning device can be buttoned up around a fencing post.

## Description

The invention relates to a wire tensioning device, adapted for the fixing and tensioning of a metal wire to a fence post via said wire tensioning device, and comprising a piece of metal strip that is bent into a form in which a first part in a U-form can be distinguished, where the bight the U is to be directed towards the wire, and a second part, that consists of the prolongations of both legs of said U-form, to be directed towards the fence post, and in which said first part comprises a spindle that is rotatably mounted in and between two openings, one in each of the legs of said U-form, said spindle being adapted for the fixing thereto and winding up thereon of the extremity of the wire to be tensioned and further being provided with barb means by which, in tensioned condition of the wire, the rotation of the spindle in the unwinding direction is prevented.

Such wire tensioning devices are sufficiently known (e.g. from FR-A-2399583).
Herein, in said second part that consists of said prolongations of both legs of the U-form, these prolongations are bent towards each other and either run continuously into each other or are fixed together by welding or other means so that both parts form together a closed loop. The wire tensioning device can then be fixed to the fence post by means of a binding wire that passes through the closed loop and around the fence post. The extremity of the wire to be tensioned is then entered through a hole in the bight of the U and fixed to the spindle and then wound up thereon, whereby the wire is tensioned en cannot be relieved because said barb means resists to this.

Other wire tensioning devices are known (e.g. from US-A-3949968) in which it is however the first part, in nearly U-form, that is directed towards the fence post, and where it is the second part, consisting of the prolongations of the legs of the U-form, that is directed towards the wire and that comprises a spindle for winding up and tensioning the wire. The same spindle has also the function of a screw that, by means of a nut, fixes both legs together so that both parts also form a closed loop. The wire tensioning device can then be fixed to the fence post by passing the device with its closed loop over the post, and tightening the nut over the screw.

It is an object of the invention to provide a similar wire tensioning device, that is simple for manufacturing, and easy for use.

According to the invention, said prolongations are in the form of two hooks directed towards each other, that are adapted for embracing together a fence post, and of which one prolongation comprises at its extremity region a button-hole, and the other prolongation comprises at its extremity region a corresponding button.

The invention will here further be explained with reference to the accompanying drawings, shown by way of example, and in which :
- Figure 1: is a conventional wire tensioning device,
- Figure 2: is a wire tensioning device according to the invention, in top view and in closed condition,
- Figure 3: is the same wire tensioning device according to the invention, in side view and also in closed condition,
- Figure 4: is the same wire tensioning device according to the invention, in top view and in open condition,
- Figure 5: is the same wire tensioning device according to the invention in open unbent condition,
- Figure 6: shows a detail view of the connection by button and button-hole, as used in this example.

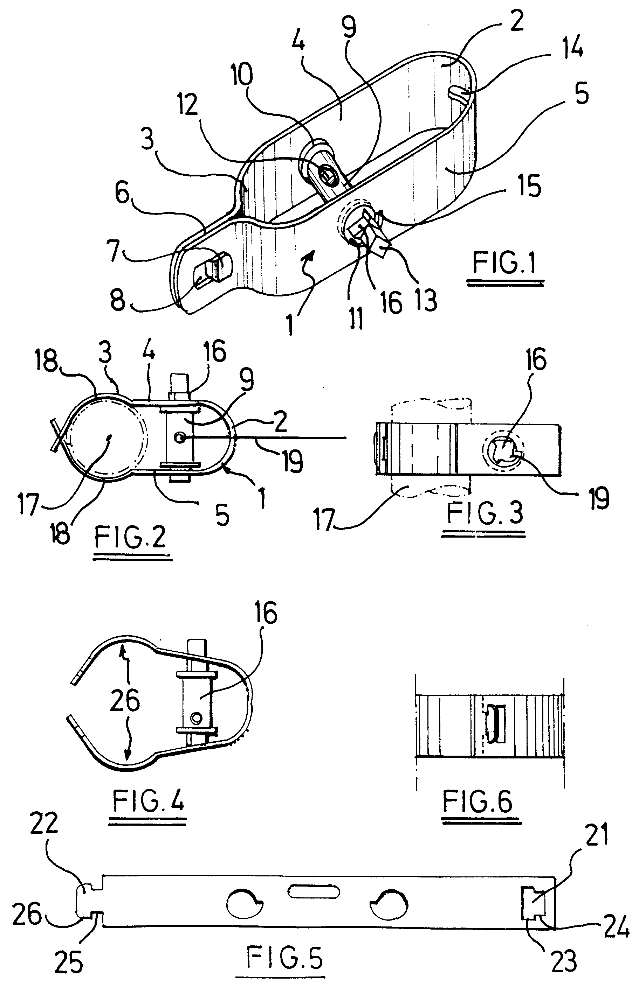

As shown in Figure 1, a known wire tensioning device comprises a piece of metal strip 1, in which a first part 2 can be distinguished, consisting of the right part according to the drawing, and a second part 3, consisting of the left part according to the same drawing. In the right part, the strip is bent over into a U-form, with two parallel legs 4 and 5. In the left part, the prolongations of both legs run towards each other until they run in parallel with each other in the direction of both legs, and touch each other according to a plane 6. At this contact plane 6, both legs are connected with each other by means of a tongue 7 of one leg, that is bent over around a hole 8 in the other leg. In this way, the metal strip is closed around itself and forms a closed loop. This wire tensioning device is tied to a post by means of a binding wire that is led through the hole 8, and of which the ends are tied around the post. The left side of the drawing consequently shows the side of the wire tensioning device to be directed towards the post.

In the right part of the wire tensioning device, between both legs 4 and 5 of the U-form, there is a spindle 9 rotatably mounted in the openings 10 and 11. There is also another opening 12 through the spindle, and the extremity 13 of the spindle has also a prismatic form, in such a way that the spindle can be turned by means of a wrench for putting the wire under tension. This wire can be entered from outside the loop through an opening 14 in the bight of the U, and further through the opening 12 in the spindle 9. The spindle is turned clockwise by means of a wrench, and in this way the wire is put under tension. The openings 10 and 11 are somewhat larger than the diameter of the spindle 9, and are not round, but have a spiral form, with a radius that increases counterclockwise, and where the discontinuity 15 from the largest, back to the smallest radius is situated at the right side of the opening, this means, at the side directed towards the wire to be tensioned. At the location of the openings, the spindle 9 is provided with barbed teeth 16 that can engage with the discontinuity 15 in a way that the back-rotation counterclockwise is not possible when the wire is in tensioned state. In that case, the spindle 9 is indeed drawn towards the right side of the openings 10 and 11, by which the barbed teeth then engage with force into the discontinuity 15. In this way, when the tensioning force is removed after the wire is put under tension, the wire cannot relieve again on its own.

Figure 2 shows a top view, and Figure 3 a side view of a wire tensioning device according to the invention. The right part, which, in the drawings, is the side of the device to be directed towards the wire 19, is, at least in this example, analog to the right part of the wire tensioning device according to Figure 1 with respect to its structure and functioning. The tensioning of the wire on the spindle 9 consequently occurs in the same way. In the left part however, which is the side to be directed towards the post, the prolongations of the legs of the U-form in the right part are bent over in another way. These prolongations 18 have the form of hooks that are directed towards each other, and adapted to embrace together a post 17. Preferably this form shall be adapted to the profile of the post. According to Figure 2, this form is adapted to a round profile of the hole, and then the hook-form consequently comprises a part 26 with constant curvature (Figure 4). These prolongations 18, instead of directly running towards each other as in Figure 1, shall consequently rather diverge from each other and then revert towards each other, so as to be able to embrace the post 17. This is however not always necessary, and depends on the thickness of the post for which the wire tensioning device is intended. In any case, the wire tensioning device comprises, like as in Figure 1, again a piece of steel strip that is closed on itself, but here there is no fixed connection, but a connection by button and button-hole.

The connection by button and button-hole in the wire tensioning device according to Figures 2 and 3 is more visible on the open unfolded metal strip as shown in Figure 5. The button-hole 21 is a hole, punched in the strip in the region of the right extremity, and has a stepped form as shown in the drawing, with a broader part 23 and, more towards the extremity, a narrower part 24. The button 22 is formed by the mushroom-form, in which the left extremity has been punched, and having a narrower part 25 and, more towards the extremity, a broader part 26. This strip is now bent into the form as shown in Figure 4, that shows the wire tensioning device in open position, i.e. not yet buttoned up.

For such buttoning up, the button 22 is passed through the broader part of the button-hole 21, and the loop formed by the strip is then drawn somewhat more open, so that the broad part 26 of the button is caught by the narrower part 24 of the button-hole. This is shown more in detail in Figure 6. It is clear that other connection devices by button and button-hole can be used instead of the one here shown. In general, any other button/button-hole means that perform the same function can be used. Preferably, the button-hole will be a hole, made in the extremity region of said metal strip, of which the dimension in the breadth increases towards the extremity, and a "corresponding button" will then be a form of the extremity of the metal strip of which the dimension in the breadth increases towards the extremity, and of which the maximal breadth is smaller than the maximal breadth of the corresponding button-hole and is larger than the minimal breadth of that button hole, in such a way that the button can be passed through the button-hole, and the button gets caught in the button-hole when the loop formed by the strip is drawn more open again. The latter is an interesting characteristic of a connection by button and button-hole, specifically in a wire tensioning device: the more the wire is tensioned, the firmer the device gets closed around the fence post.

The wire tensioning device according to the invention is also handy for use. No tieing operation is necessary any more, but the device is directly fixed to the post. Such fixing is simple, and, because the wire tensioning device has no closed form when not yet installed (Figure 4), it is not absolutely necessary to place and fix it by passing it over the top of the post and slipping it downward. The latter is sometimes not, or no longer possible, and then the wire tensioning device can be pushed in open position against the post at the heighth where it has to be fixed, and closed there.

The wire tensioning device is preferably made of mild steel, and can be manufactured very simply, because the exact form of the metal strip can be punched therein, in one single operation, together with the button and button-hole and all other necessary openings.

The way in which the spindle 9 is prevented from rotating back, whereby the wire 19 would be relieved again, is realized in this example by means of barbed teeth 16 that engage in the circumference of the openings 10 and 11 wherein the spindle is mounted. It is clear that the invention is not limited by this method, but that each barb means can be used, i.e. means that allow rotation in one sense and, in the position when the wire is under tension, prevent rotation in the other sense.

## Claims

1. A device adapted for the fixing and tensioning of a metal wire (19) to a fence post (17), and comprising a piece of metal strip (1) that is bent into a form in which a first part (2) in a U-form can be distinguished, and a second part that consists of the prolongations (18) of both legs of said U-form, and in which said first part comprises a spindle (9) that is rotatably mounted in and between two openings, one in each of the legs of said U-form, said spindle being adapted for the fixing thereto and winding up of the extremity of the wire (19) to be tensioned and further being provided with barb means (16) by which, in tensioned condition of the wire, the rotation of the spindle in the unwinding direction is prevented, **characterized in that** said prolongations (18) are in the form of two hooks directed towards each other, that are adapted for embracing together a fence post (17), and of which one prolongation comprises at its extremity region a button-hole (21), and the other prolongation comprises at its extremity region a corresponding button (22).

2. A device according to claim 1, in which said button and button-hole are in the form of flat configurations obtained by punching said metal strip.

3. A device according to claim 2, in which said button (22) consists of the punched form of said other prolongation.
